# EUROPÄISCHE PATENTSCHRIFT

(11) **EP 1 187 713 B1**
(45) Veröffentlichungstag und Bekanntmachung des Hinweises auf die Patenterteilung: **08.10.2003**
(21) Anmeldenummer: 00903589.0
(22) Anmeldetag: 19.01.2000
(51) Int. Cl.: B29C 31/00

(54) **VERFAHREN ZUR HERSTELLUNG VON GESCHLEUDERTEN GLASFASERVERSTÄRKTEN KUNSTSTOFFROHREN**
METHOD OF PRODUCING CENTRIFUGALLY CAST, GLASS FIBER REINFORCED PLASTIC TUBES
PROCEDE POUR LA PRODUCTION PAR CENTRIFUGATION DE TUBES EN PLASTIQUE RENFORCES DE FIBRES DE VERRE

(30) Priorität: 22.01.1999 DE 19902456; 18.06.1999 DE 19927954; 25.10.1999 DE 19951316
(43) Veröffentlichungstag der Anmeldung: 20.03.2002
(73) Patentinhaber: C-Tech Ltd., Diplomatic Area, Manama (BH)
(72) Erfinder: CARLSTRÖM, Börge, S-263 58 Höganäs (SE)
(74) Vertreter: König, Beate, Dipl.-Phys. Dr.
(86) Internationale Anmeldenummer: EP0000406
(87) Internationale Veröffentlichungsnummer: WO00043185

(56) Entgegenhaltungen:
- EP-A- 0 360 758
- WO-A-98/56555
- DE-A- 1 479 548
- DE-A- 1 779 980
- DE-A- 3 510 626
- FR-A- 2 684 917
- GB-A- 1 051 851
- US-A- 4 705 660
- US-A- 4 980 112
- PATENT ABSTRACTS OF JAPAN vol. 013, no. 376 (M-862), 21. August 1989 (1989-08-21) & JP 01 128812 A (FURUKAWA ELECTRIC CO LTD:THE), 22. Mai 1989 (1989-05-22)

## Beschreibung

Die Erfindung betrifft ein Verfahren und eine Anlage zur Herstellung von geschleuderten glasfaserverstärkten Kunststoffrohren, wobei flüssiges aushärtbares Harz, welches einen Füllstoff enthalten kann, zusammen mit Glasfasern und Additiven für die Aushärtung, möglicherweise auch mit Sand, in eine rotierende Matrize eingebracht wird.

Bei der Herstellung von geschleuderten glasfaserarmierten Kunststoffrohren, insbesondere, wenn gefüllte Polyesterharze verwendet werden, sind die Langzeitringsteifigkeiten sehr niedrig. Ein Zweck dieser Erfindung ist es, die Langzeitringsteifigkeit zu verbessern.

Bei bekannten Verfahren zur Herstellung von sandgefüllten geschleuderten glasfaserverstärkten Kunststoffrohren ist die Herstellungszeit sehr lang. Dieses hängt damit zusammen, daß der Einspritzarm, womit das Material in die rotierenden Matrizen eingebracht wird, zwischen unterschiedlichen Stationen geführt wird, und daß die Aushärtungszeit lang ist.

In der CH 684 326 ist ein Verfahren beschrieben, bei dem Warmwasser verwendet wird, um die Schleudermatrize auf 40°C bis 50°C zu erwärmen, wobei gemäß einer in der FR 2 684 917 A beschriebenen Verfahrensvariante 90 Sekunden lang eine Matrizentemperatur von 60 bis 70°C erreicht werden soll. Durch den exothermen Verlauf der Aushärtereaktion kommt es zu einer Erwärmung der Matrize über 50°C hinaus. Bei der Aushärtung bleibt aber die Temperatur in dem Außenteil des Rohres gleich der Temperatur der Matrize, d.h. etwa 50°C bis 60°C. Im inneren Teil des Rohres steigt jedoch die Temperatur auf 80°C bis 120°C. Dadurch erhält man eine sehr gute Aushärtung im inneren Teil des Rohres, aber eine schlechte Aushärtung in dem Teil des Rohres, wo die Wärme in die Matrize übergegangen ist.

Es hat sich in der Praxis gezeigt, daß es schwierig ist, die Gelzeit in dem inneren Wandbereich wie benötigt kurz zu halten, damit die Verdichtung in den äußersten Schichten nicht zu hoch wird. Ist die Verdichtung nämlich zu hoch, kann der Glasgehalt 70 Gew.-% erreichen und dadurch eine gute Aushärtung verhindern.

In der DE 35 10 626 A ist ein Verfahren zur Herstellung von geschleuderten glasfaserverstärkten Kunststoffrohren beschrieben, bei dem die Verteilung von als Füllstoff verwendetem Sand und von Glasfasern derart ist, daß im Außenbereich des Rohrs 20 bis 70 Gew.-% und im Innenbereich 30 bis 80 Gew.-% der Glasfasern angeordnet sein können. Bei einem als Beispiel angegebenen Gesamtgehalt von 1,7% Glasfasern, 20,7% Harz und 77,6% Sand ergibt sich indessen, daß aufgrund der Verwendung von Sand der Glasfasergehalt im Innenteil des Rohrs niedriger als in den entsprechenden Außenschichten des Rohrs ist.

Der Erfindung liegt die Aufgabe zugrunde, es zu ermöglichen, glasfaserverstärkte Kunststoffrohre nach dem Schleuderverfahren mit sehr kurzer Herstellungszeit, ferner mit guter Qualität herzustellen.

Diese Aufgabe ist bei einem Verfahren mit den Merkmalen des Anspruchs 1 gelöst. Vorteilhafte Verfahrensvarianten sind Gegenstand der abhängigen Ansprüche.

Gegenstand der Erfindung ist somit ein Verfahren für die Herstellung von geschleuderten glasfaserverstärkten Kunststoffrohren, wobei flüssiges aushärtbares Harz, welches einen Füllstoff enthalten kann, zusammen mit Glasfasern und Additiven für die Aushärtung, möglicherweise auch mit Sand, in eine rotierende Matrize eingebracht wird. Die Matrize hat beim Einbringen der Rohstoffe eine Temperatur zwischen 40°C und 75°C und die Wärmekapazität der Matrize so hoch, daß die Temperatur der Matrize unter Einfluß der Rohstoffe, d.h. mit deren Einbringen, nicht mehr als 10°C gesenkt wird. Zum Aufwärmen der Matrize wird Warmwasser verwendet, das nach dem Starten der exothermen Reaktion des Harzes auf die Matrize gespritzt wird, um die Temperatur der Matrize mindestens bei 60°C zu halten, bis das Rohr ausgezogen wird.

Bei Ausführung des erfindungsgemäßen Verfahrens ist die Herstellungszeit sehr kurz und es ergibt sich eine verbesserte Qualität der Rohre insbesondere durch deren gleichmäßige Aushärtung.

Das Warmwasser kann bei Anwendung dieser Verfahrensvariante einen Temperaturbereich von 55 bis 80°C haben.

Vorzugsweise hat die Matrize vor dem Einbringen der Rohstoffe eine Temperatur zwischen 55°C und 75°C.

Gemäß einer vorteilhaften Variante des erfindungsgemäßen Verfahrens werden die Temperatur des Warmwassers und die Spritzdauer so gewählt, daß die Temperatur der Matrize mindestens bei 70°C bleibt, bis das Rohr ausgezogen wird.

Die Kapazität zur Herstellung der Rohre ist erhöht, wie unten beschrieben wird:
a) durch die Verwendung einer Härtungstemperatur, einer Wärmeübertagungstechnik und eines Systems zur Aushärtung, welche eine schnelle Aushärtung ohne Rißbildung geben;
b) durch die Verwendung einer Anlage, wo die Einspritzmaschine eine feste Position hat und die Schleudermaschinen mit den Matrizen so geführt werden, daß eine Maschine nach der anderen in Einspritzposition kommt.

Die Verbesserung der Qualität der Rohre wird dadurch erzielt, daß eine Mischung von Polyesterharz mit hohem Gehalt an Füllstoff verwendet wird, aber bei unterschiedlichen Schichten in dem Rohr wird die Mischung mit Reinharz verdünnt, so daß die entsprechenden Schichten weniger Füllstoff enthalten.

Vorteilhaft ist die Wärmekapazität der Matrize so hoch, daß die Temperatur der Matrize unter Einfluß der Rohstoffe nicht mehr als 10°C gesenkt wird.

Durch Steuerung der Matrizentemperatur wird zunächst die Matrizenwärme ausgenutzt, um die eingebrachten Rohstoffe zu erwärmen. Während des Härtungsprozesses wird Wärme an die Matrize übertragen. Mit Eintritt der Rohrschrumpfung bleibt der größte Teil der Reaktionswärme im Rohr.

Weiter wird bei kontinuierlicher Herstellung der Rohre, das neue sofort nach dem alten, bei einer bevorzugten Variante des Verfahrens kurz vor dem Entformen der Rohre Warmwasser auf die Matrize gespritzt, so daß die Matrize dieselbe Temperatur bekommt, die bei der Herstellung des neuen Rohres erforderlich ist.

Mit diesen Maßnahmen sollen die Härtungstemperatur und Wärmeübertragungstechnik eine schnelle Aushärtung der Rohre ohne Rißbildung und ein leichtes Entnehmen der fertiggestellten Rohre ermöglichen.

Vorzugsweise wird der Glasfasergehalt im Innenbereich des Rohres höher als im Außenbereich gewählt. Entsprechend ist der Füllstoffgehalt im Außenbereich höher. Bei einer vorteilhaften Verfahrensvariante enthalten alle Schichten im Innenbereich mit Ausnahme der inneren Deckschicht Füllstoff. In allen Schichten, in denen Glasfasern mit Orientierung in Umfangsrichtung vorliegen, ist auch Füllstoff vorhanden, zweckmäßig mindestens 40%.

Die erfindungsgemäß hergestellten Rohre haben eine verbesserte Langzeitringsteifigkeit.

Durch den Einsatz von langen Glasfasern, d.h. Glasfasern mit einer Länge von mehr als 50 mm, vorzugsweise mehr als 75 mm, läßt sich diese Eigenschaft verbessern. Vorzugsweise werden im Innenbereich Glasfasern verwendet, deren Länge größer als die der im Außenbereich des Rohres verwendeten Glasfasern ist. Durch den Einsatz von langen Glasfasern können Rohre mit höheren Berstdrücken gefertigt werden. Die Rohre haben jedoch zugleich eine niedrigere Axialfestigkeit.

Bei kleinen Rohrdurchmessern, etwa bis 400 mm, kann so die Axialfestigkeit zu gering sein, besonders bei Rohren mit niedrigen Nenndrücken. Es ist daher vorteilhaft, nur auf der Innenseite längere Glasfasern zu verwenden und auf der Außenseite kurze Fasern mit einer Länge von 25 bis 50 mm zu verwenden.

Vorteilhaft kann die Einmischung von Polyesterharz in die Füllstoff-Polyesterharz-Mischung stattfinden, wenn die Kernschicht mit Sand in der Mitte des Rohres hergestellt wird. Bei einem anderen Ausführungsbeispiel der Erfindung findet die Einmischung von Polyesterharz und/oder Styrol in die Füllstoff-Polyesterharz-Mischung statt, wenn die armierten Schichten im inneren Teil des Rohres hergestellt werden.

Die Erfindung wird untenstehend mittels Beispielen und anhand der Zeichnungen beschrieben, wobei diese Darstellung zur Erläuterung der Erfindung dient, diese jedoch mit den Konkretisierungen nicht einschränken soll, so wie auch die Erfindung nicht auf die konkreten Merkmalskombinationen in den abhängigen Ansprüchen beschränkt sein soll. Es zeigen
- Fig. 1: schematisch die Anordnung von Einspritzmaschine und Schleudermaschine mit zwei Matrizen für zwei Verfahrenspositionen,
- Fig. 2: schematisch die Anordnung von Einspritzmaschine und Schleudermaschine mit drei Matrizen für drei Verfahrenspositionen,
- Fig. 3: ein Diagramm, das den Temperaturverlauf bei einer Formtemperatur von 55°C zeigt,
- Fig. 4: ein Diagramm ähnlich Fig. 3, das den Temperaturverlauf ohne Vorhandensein von Füllstoff zeigt,
- Fig. 5: ein Diagramm ähnlich Fig. 3 und 4, das die Reduktion der Reaktivität durch Reduktion von Beschleunigern zeigt,
- Fig. 6: ein Diagramm, das den Temperaturverlauf bei der Rohrherstellung für unterschiedliche Meßhöhen zeigt,
- Fig. 7: ein Diagramm, das den Temperaturverlauf bei unterschiedlichen Einspritzzeiten zeigt, und
- Fig. 8: ein Beispiel für einen Teil eines Leitungsplans einer nach dem erfindungsgemäßen Verfahren arbeitenden Anlage zur Herstellung geschleuderter glasfaserverstärkter Kunststoffrohre,

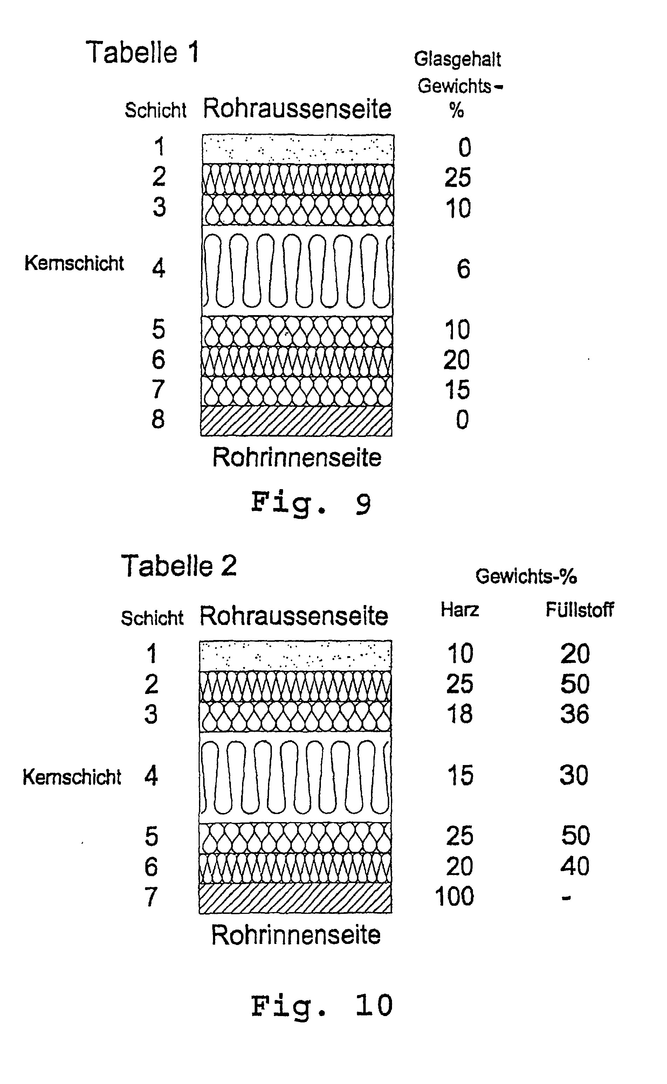

- Fig. 9: anhand von Tabelle 1 die Darstellung des Glasfasergehalts im Schichtaufbau eines Rohrs gemäß Beispiel 1,
- Fig. 10: anhand von Tabelle 2 die Darstellung des Harz- und Füllstoffgehalts im Schichtaufbau eines Rohrs gemäß Beispiel 2,

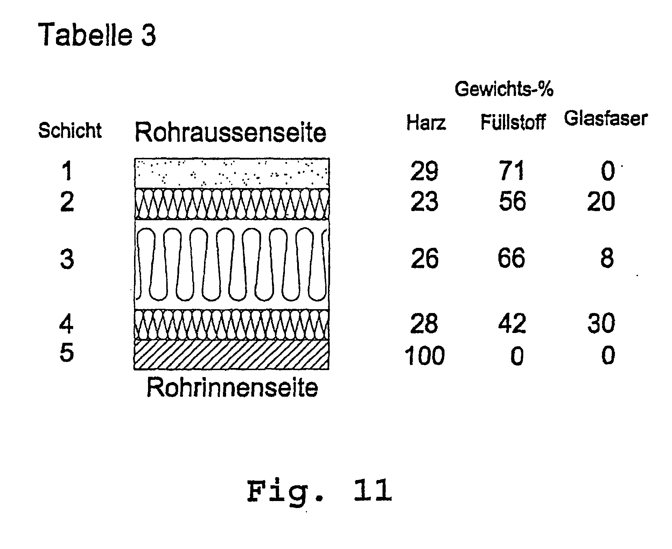

- Fig. 11: anhand von Tabelle 3 die Darstellung des Harz-, Füllstoff- und Glasfasergehalts im Schichtaufbau eines Rohrs gemäß Beispiel 6, und

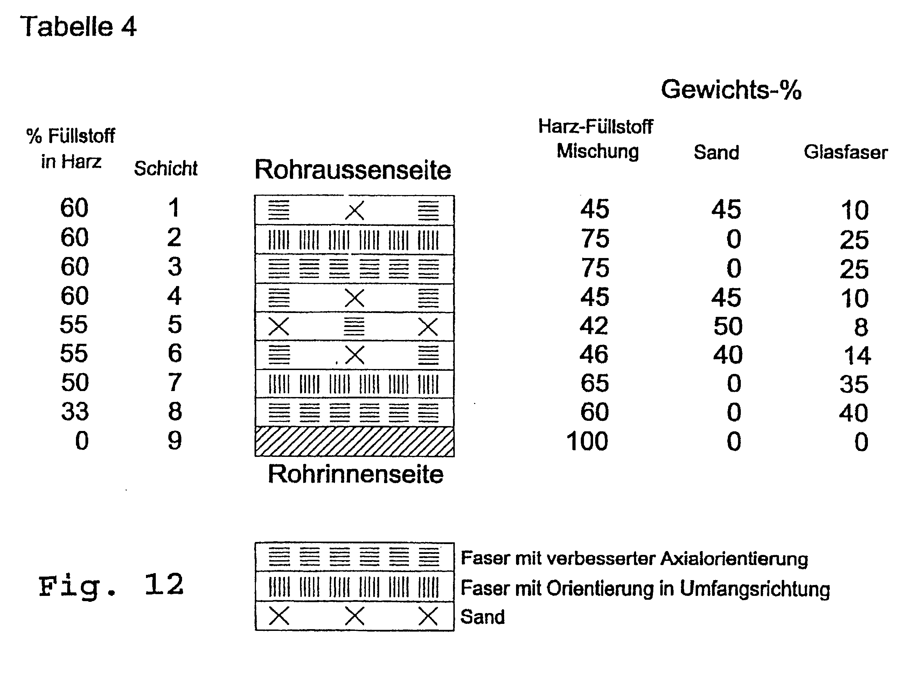

- Fig. 12: anhand von Tabelle 4 die Darstellung des Füllstoff-, Harz-Füllstoff-Mischungs-, Sand- und Glasfasergehalts im Schichtaufbau eines Rohrs gemäß Beispiel 7.

### Beispiel 1

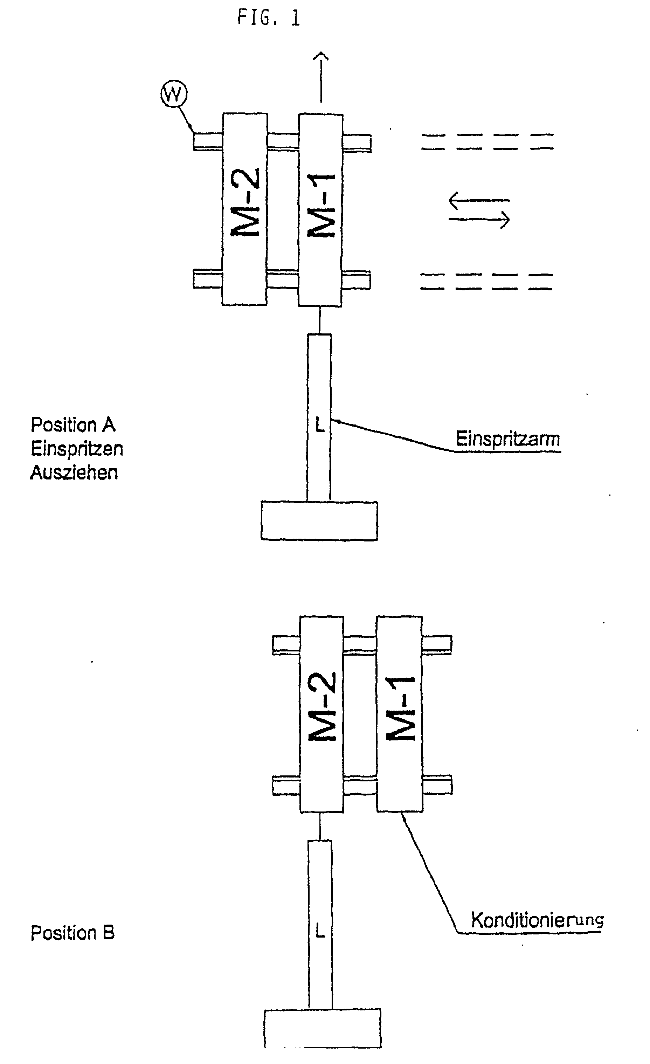

Es wird auf Fig. 1 hingewiesen. Die Matrizen (M) sind auf einem Wagen (W) montiert. Der Wagen kann in die Richtung auf Schienen geführt werden, wie die Pfeile zeigen. Die Einspritzmaschine (E) ist auch auf Schienen montiert und bewegbar, so daß die Lanze (L) in die Matrize ein- und ausgeführt werden kann. In diesem Beispiel sind zwei Matrizen mit Nenndurchmesser DN 800 auf dem Wagen montiert worden. Rohstoffe gemäß Beispiel 4 werden gefördert, so daß acht Schichten mit unterschiedlichen Eigenschaften erhalten werden. Das Gewicht der Matrize ist 600 kg/m mit einer Wärmekapazität von 66 kcal/m. Die Wärmekapazität der Rohstoffe ist 26 kcal/°C;m mit einer Mitteltemperatur von 35°C. Die Matrize wird auf eine Temperatur von 65°C aufgewärmt mit der Hilfe von Warmwasser gesprüht auf der Außenseite der Matrize, bevor die Rohstoffe schichtenweise eingebracht werden. Wegen der großen Wärmekapazität der Matrize werden die Rohstoffe sowie die Matrize eine Temperatur von 56°C erhalten.

Vorne in der Lanze gibt es Mischungsvorrichtungen, wodurch Katalysatoren, Akzeleratoren, Inhibitoren und Polyesterharze, welche separat zugeführt worden sind, in eine Mischung von Polyesterharz und Füllstoff eingemischt werden können, wodurch unterschiedliche Reaktivität der Füllstoffmischung eingestellt werden kann. Für die Außenschicht der Rohre wird eine hohe Reaktivität eingestellt, so daß diese Schicht unter Einfluß der Wärme von der Matrize schnell reagiert und gelatiniert. Für die nächste Schicht ist eine niedrigere Reaktivität eingestellt. Dann bei den folgenden Schichten wird die Reaktivität stufenweise erhöht, mit Ausnahme der inneren Deckschicht. Die Förderungskapazitäten für die Rohstoffe sind so gewählt, daß die Gesamtzeit für die Einbringung der Rohstoffe sieben Minuten beträgt. Nach acht Minuten wird der Wagen versetzt, so daß die Matrize M2 in die Einspritzposition kommt (Position B). Hier gibt es die Möglichkeit, Luft in Raumtemperatur durch das erste Rohr zu ziehen, damit keine Risse innen im Rohr entstehen. Nach fünf Minuten in Position B wird Heißwasser außen auf die Matrize gesprüht, so daß die Matrize eine Temperatur von 65°C erreicht. Nach einer Gesamtzeit von 16 Minuten wird der Wagen in die Ausgangsposition gebracht, wo das Rohr ausgezogen wird. Nach dem Ausziehen des Rohres wird der Zyklus wieder angefangen. Bevor der Wagen in Position B kommt, wird die Matrize M2 mit Warmwasser auf 65°C gebracht. In Position B wird das Rohr in Matrize M2 ausgezogen und ein neues Rohr hergestellt.

Die Herstellungszeit für ein Rohr beträgt 18 Minuten, die Produktionskapazität ist damit 160 Rohre pro 24 Stunden.

### Beispiel 2

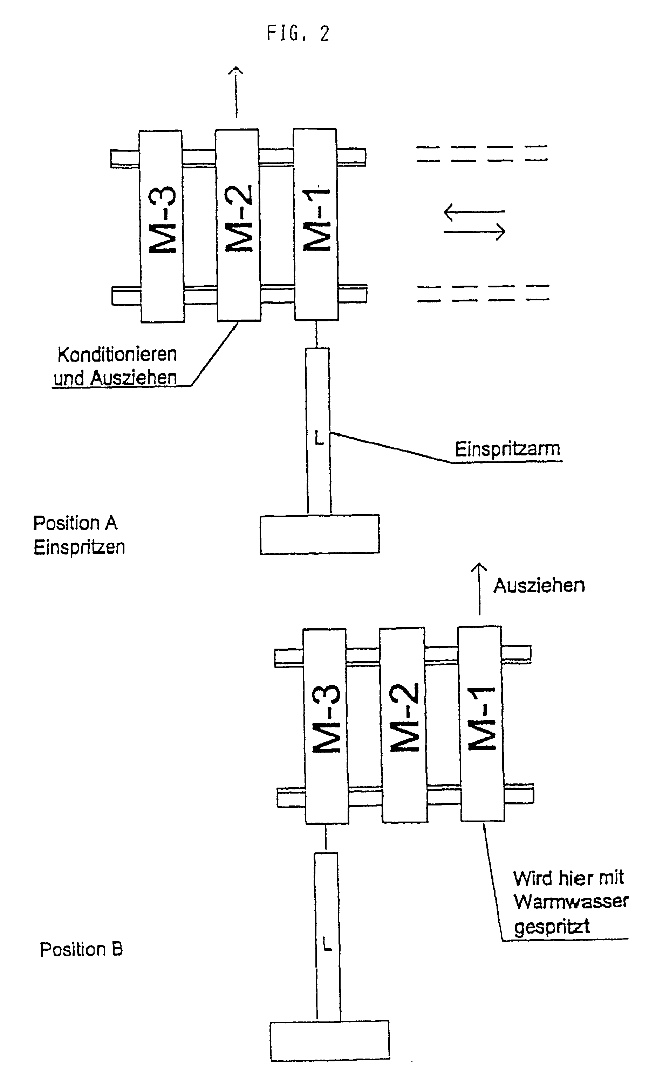

Auf dem Wagen in Beispiel 1 werden drei Matrizen DN 500 montiert, wie in Fig. 2 gezeigt wird. Bevor die Matrize M-1 in die Einspritzposition kommt, wird sie auf 65°C erwärmt. Die Einspritzzeit ist vier Minuten. Gleichzeitig wird die Matrize M-2 auf 65°C erhitzt. Nachdem die Rohstoffe in die Matrize M-2 eingebracht worden sind, wird die Matrize M-3 in Einspritzposition gebracht, siehe Position B in Fig. 2. Dabei wird die Matrize M-1 durch Warmwassersprühen auf 65°C gebracht. Das Rohr wird ausgezogen, bevor die Matrize M-1 zurück in Einspritzposition geht, bei der die Rohstoffe eingebracht werden.

Die Zykluszeit beträgt 18 Minuten und die Kapazität 225 Rohre pro 24 Stunden. Der Rohraufbau ist in Beispiel 5 gezeigt.

### Beispiel 3

Auf dem oben beschriebenen Wagen sind vier Matrizen DN 300 montiert. Das Herstellungsverfahren ist analog mit den Beschreibungen der Beispiele 1 und 2 mit Rohrausziehen in der Einspritzposition und mit zwei separaten Positionen für Warmwassersprühen, wobei die Matrizen auf 70°C aufgewärmt werden. Die Rohrkapazität ist 300 Rohre pro 24 Stunden.

Das neue Verfahren wird nachstehend noch.genauer erläutert. Während des Einbringens der Rohstoffe wird Wärme schnell von der Matrize dem Material zugeführt. Um in der Matrize nicht so viel Wärme zu verlieren, soll die Wärmekapazität der Matrize so hoch sein, daß der Temperaturverlust (etwa unter dem Einfluß der Rohstoffe) maximal 10°C beträgt. Die Härtung der Rohre fängt durch die Wärmeübertragung von der Matrize an. Das Warmwasser wird nicht verwendet, um die Reaktion des Polyesterharzes zu starten, wie im Schweizer Patent 684 326 beschrieben ist, sondern um die Matrize auf die richtige Temperatur zu konditionieren. Andere Wärmequellen können auch verwendet werden, z.B. Warmluft.

In der ersten Phase der Härtung wird Wärme schnell in die Matrize übertragen. Später, wenn das Rohr zu schrumpfen anfängt, bleibt der größte Teil der Reaktionswärme im Rohr. Dadurch bekommt man eine Temperatursteigerung im Rohr. Der Umfang der Schrumpfung ist größer, je größer die Rohre sind und sie kann besonders bei großen Durchmessern von dem Härtungssystem beeinflußt werden. Durch eine Erhöhung der Reaktivität in der Außenschicht bekommt man mehr Schrumpfung im Rohr von der Matrize weg als in der Längsrichtung. Dadurch kann man das Rohr schneller und einfacher ausziehen.

Der Zeitpunkt bei der Härtung, wann die Schrumpfung passiert, hat einen großen Einfluß auf die maximale Temperatur im Rohr ("peak exotherm temperature") :

In Beispiel 1 würde die Temperatur etwa 96°C betragen, wenn die totale Wärmemenge im Rohr bleiben würde. Wegen der großen Schrumpfung in mm, abhängig von dem großen Durchmesser, geht nur etwa 25% der entwickelten Wärmemenge in die Matrize, welche dann eine Temperaturerhöhung von 56°C auf 60°C bekommt. Die im Rohr verbleibende Wärmemenge erhöht die Rohrtemperatur auf etwa 86°C.

Das Sprühen von Warmwasser auf die Matrize vor dem Ausziehen des Rohres findet in diesem Fall statt, um die Matrizentemperatur zu erhöhen.

In Beispiel 3 aber wird etwa 50% der entwickelten Wärmemenge in die Matrize geleitet, wo die Temperatur auf 75°C erhöht wird. In diesem Fall dient das Sprühen von Wasser dazu, Wärme vom Rohr in die Matrize zu leiten, um zu verhindern, daß die Temperatur im Rohr zu hoch steigt.

Es ist wichtig, die Verhältnisse so zu wählen, daß die Rohrtemperatur 100°C nicht übersteigt, damit keine Risse in der Innenseite des Rohres entstehen. Dies wird gewährleistet durch die Wahl von geeigneten Parametern wie Wärmekapazität der Matrize, Wassertemperatur, Zeitpunkt der Schrumpfung und Enthalpie des Polyesterharzsystems, z.B. Menge Füllstoff im Harz.

### Erläuterungen

In den Beispielen sind auf dem Wagen Matrizen mit denselben Nenndurchmessern (DN) montiert, DN 800, DN 500 und DN 300 [Zahlenangaben jeweils in mm]. Unterschiedliche Durchmesser können auch gleichzeitig montiert werden z.B.
DN 900, DN 800
DN 600, DN 500, DN 400
DN 350, DN 300, DN 250, DN 200

Das neue Verfahren mit der Einspritzmaschine in einer festen Position bietet Vorteile gegenüber dem üblichen Verfahren, wo die Einspritzmaschine zu den Schleudermaschinen in festen Positionen versetzt wird. Die Zuführung von Rohstoffen wird viel einfacher.

Ein weiterer Vorteil ist, daß das Ausziehen der Rohre bei einer festen Position stattfindet, wo eine Hilfsausrüstung aufgebaut werden kann. Dazu kommt, daß das Aufspritzen von Wasser auch in festen Positionen kommt und nicht für jede Schleudermaschine aufgebaut wird.

Folgende Beispiele zeigen, wie die Qualität der Rohre verbessert wird.

### Beispiel 4

Ein Rohr DN 800 in Beispiel 1 ist ein Mehrschichtrohr PN 10 (Nenndruck: 9,8 bar), SN 10000 (Nennsteifigkeit: 10.000 N/m²) und es hat 8 Schichten, wie in Tabelle 1 gezeigt.

Ähnliche Rohre sind in der EP 0 360 758 A beschrieben.

Wegen der großen Reaktivität in den Schichten 6 und 7 ist der Gehalt an Glasfaser in diesen Schichten sehr niedrig. Um die Verdichtung dieser Schichten zu verbessern, wird Polyesterharz ohne Füllstoff für diese Schichten in die Mischung von Polyesterharz-Füllstoff eingemischt. Dadurch wird der Gehalt an Füllstoff im Polyesterharz von 150 Gewichtteilen für 100 Gewichtteile Harz auf 100 Gewichtteile reduziert. Der Glasgehalt in Schicht 6 wird von 20% auf 25% erhöht und in Schicht 7 von 15% auf 20%. Dadurch wird die Scheiteldruckdeformation von 12% auf 20% erhöht.

Wenn noch mehr Reinharz verwendet wird, so daß der Füllstoffgehalt auf 33 Gew.-% gesenkt wird und gleichzeitig die Rotationsgeschwindigkeit der Matrize wesentlich erhöht wird, wird der Gehalt an Glasfaser auf 55 Gew.-% respektive 50 Gew.-% erhöht. Die Scheiteldruckdeformation wird dadurch auf 35% erhöht. Der Verbrauch an Polyesterharz wird stark reduziert.

### Beispiel 5

Das Rohr DN 500 in Beispiel 2, dessen Schichtaufbau in Tabelle 2 gezeigt ist, ist ein Abwasserrohr für innendrucklose Verwendungen, SN 10000. Die Langzeit-Ringsteifigkeit des Rohres ist ziemlich niedrig wegen eines niedrigen Gehaltes an Glasfaser in der Kernschicht des Rohres sowie wegen eines großen Anteiles dieser Schicht von 40% der Gesamtwanddicke des Rohres. Aus Kostengründen ist der Gehalt an Füllstoff in den Schichten 2 und 5 ziemlich hoch.

Reinharz wird in die Mischung von Füllstoff-Polyesterharz eingemischt, wenn Schicht 4 hergestellt wird. Gleichzeitig wird mehr Glasfaser verwendet. Dadurch wird die Zusammensetzung der Schicht 4 wie folgt geändert:
Reinharz von 15% auf 20%
Glasfaser von 4% auf 8%
Füllstoff von 30% auf 25%
Sand von 51 % auf 47%

Die Langzeitringsteifigkeit wird dadurch verdoppelt.

### Beispiel 6

Ein Rohr DN 250 wird hergestellt ohne Sand, sondern nur mit Glasfaser, Füllstoff-Polyesterharz-Mischung und einem flexiblen Polyesterharz als Deckschicht. Für 100 Gewichtteile Polyesterharz werden 250 Teile Füllstoffharz verwendet. Der Rohraufbau ist wie in Tabelle 3 gezeigt.

Um so einen Rohraufbau zu erreichen, müssen die Viskosität der Mischung Füllstoff-Polyesterharz in den einzelnen Schichten sowie der Gehalt an Füllstoff verändert werden. Wichtig ist aus Kostengründen, daß Schicht 3 wenig Glasfasern und viel Füllstoff enthält, weil kein Sand vorhanden ist. Die Rohrherstellung erfolgt wie unten beschrieben:

Durchgehend wird die genannte Stamm-Mischung 250 Gewichtteile Füllstoff auf 100 Gewichtteile Polyesterharz zur Einspritzmaschine gefördert, aber vorne in der Lanze mit Polyesterharz und Styrol verdünnt.

Bei Schicht 1 wird die Stamm-Mischung verwendet. Bei Schicht 2 wird die Stamm-Mischung mit Polyesterharz gemischt, so daß die Mischung 33% Polyesterharz enthält und die Viskosität 5000 Centipoise ist. Bei Schicht 3 wird die Stamm-Mischung verwendet. Bei Schicht 4 wird die Stamm-Mischung mit Styrol und Polyesterharz gemischt, so daß die Viskosität 1000 Centipoise beträgt.

### Beispiel 7

Bei Herstellung des Rohres in Beispiel 4 wird für die Deckschicht in dem Mischer vorne in der Lanze ein Polyisocyanat auf Basis von Diphenylmetandiisocyanat eingemischt. Das so hergestellte Rohr hat eine verbesserte Wasserbeständigkeit.

Um eine optimale Wirkung von Isocyanat zu erreichen, muß die Konzentration des Isocyanates in der Größenordnung von 4 bis 6 Gew.-% liegen. Deswegen ist es aus Kostengründen zweckmäßig, die Deckschicht in zwei Lagen einzubringen, die erste Lage mit zwei Drittel der Menge und nachher ein Drittel mit 6% Isocyanat.

Die Einmischung von Isocyanaten in das Deckschichtharz ist auch dann zu empfehlen, wenn das System eines GFK-Rohres innen mit Isocyanat nachbehandelt wird. So eine Kombination gibt hervorragende Ergebnisse.

Es werden nun weitere Beispiele Bezug nehmend auf Tabelle 4 erläutert, die ein Beispiel eines erfindungsgemäßen Mehrschichtrohrs zeigt. In der Schicht 3 dieses Rohres haben die kürzeren Fasern weniger Umfangsorientierung erhalten.

### Beispiel 8

Eine Schleudermatrize DN 1400 wird auf 40°C erwärmt. Alle Harz-Füllstoffmischungen werden auf eine Gelzeit von 15 Minuten eingestellt. Dann werden alle Schichten gemäß dem in der Tabelle gezeigten Aufbau eingebracht und die Matrize dann drei Minuten lang mit Warmwasser bespritzt, das eine Temperatur von 65°C hat. Nach 30 Minuten kann das Rohr ausgezogen werden.

### Beispiel 9

Eine Schleudermatrize DN 1400 wird auf 45°C erwärmt. Die Zahl der Schichten bei diesem Beispiel ist 36 statt 9. Die Gelzeit der Schichten 1 bis 8 beträgt 12 Minuten, die der Schichten 11 bis 25 10 Minuten und die der Schichten 26 bis 36 7 Minuten. Nach 10 Minuten kann das Rohr ausgezogen werden.

Der Füllstoffgehalt der für das Rohr gemäß dem neunten Beispiel verwendeten Harz-Füllstoff-Mischung ist statt 60% 40%. Mit einem solchen Rohr kann eine schnellere Aushärtung erhalten werden.

### Beispiel 10

Eine Schleudermatrize DN 1800 wird mit Warmwasser mit einer Temperatur von 80°C bespritzt, bis die Temperatur der Matrize 75°C ist. Dann werden die Rohstoffe eingebracht, um ein GFK-Rohr mit einer Wandstärke von 40 mm herzustellen. Die Wärmekapazität der Matrize ist nicht so hoch, so daß der Temperaturabfall auf 10°C begrenzt werden kann. Die Temperatur der Rohstoffmischung sinkt daher auf 50°C ab, ist jedoch ausreichend hoch, um eine exotherme Reaktion zu starten. Um zu verhindern, daß die Temperatur an der Außenseite des Rohres bei 50°C bleibt, wird die Matrize fünf Minuten nach dem Einbringen der Rohstoffe wieder mit Warmwasser mit einer Temperatur von 80°C bespritzt, so daß die Temperatur der Matrize bei 70°C bleibt.

### Beispiel 11

Eine Schleudermatrize DN 200 wird mit Warmwasser bespritzt, bis die Temperatur der Matrize 55°C beträgt. Rohstoffe für ein Rohr PN 10, SN 5000 werden bei Raumtemperatur eingebracht. Die Matrizentemperatur sinkt auf 45°C ab. Die exotherme Härtungsreaktion erhöht die Matrizentemperatur auf 50°C. Um die Matrizentemperatur erhöhen und eine gute Aushärtung an der Außenseite des Rohres zu erhalten, wird die Matrize fünf Minuten nach Abschluß des Materialeintags zwei Minuten lang mit Warmwasser bespritzt, das eine Temperatur von 70°C hat, so daß die Matrizentemperatur mindestens bei 60°C bleibt.

Bei herkömmlich geschleuderten GFK-Rohren ist der Glasfasergehalt in den armierten Schichten auf der Innenseite niedriger als auf der Außenseite, besonders, wo eine Sandschicht in der Mitte des Rohres ist. Wenn mit dem Verfahren der Gehalt an Glasfaser erhöht wird, können diese Schichten dünner gemacht und die Materialkosten gesenkt werden. Außerdem bekommt man weniger Kriechen in den Rohren bei Erdverlegung. Die Scheiteldruckfestigkeit wird erhöht.

Es ist zweckmäßig, Laboruntersuchungen durchzuführen, um die Reaktivitäten der unterschiedlichen Schichten einzustellen. Solche Untersuchungen wurden in Formen gemacht, wobei der Unterteil dickwandig war und die Dicke entsprechend bestimmten Matrizen eingestellt wurden. Untenstehend wird auf die Ergebnisse von Untersuchungen eingegangen, die in einer Form entsprechend DN 300 mit Matrizenwanddicke 12,5 mm durchgeführt wurden.

Als Katalysator wurde eine Mischung von Acetylacetonperoxid mit t-Butylperoxibenzoat verwendet. Die Menge war normalerweise 1,5% berechnet auf Reinharz. Als Akzelerator wurde teils Kobaltbeschleuniger verwendet, um das Acetylacetonperoxid in Reaktion zu bringen, und es wurde N,N-Dietylacetoacetamid verwendet, um das Butylperoxibenzoat in Reaktion zu bringen. Der Kobaltbeschleuniger enthielt 1% Co und wurde in Mengen von 1 bis 3 %, auf Reinharz berechnet, verwendet. Das Dietylacetoacetamid (Promotor D) wurde in Mengen von 0,2 bis 0,6 % verwendet.

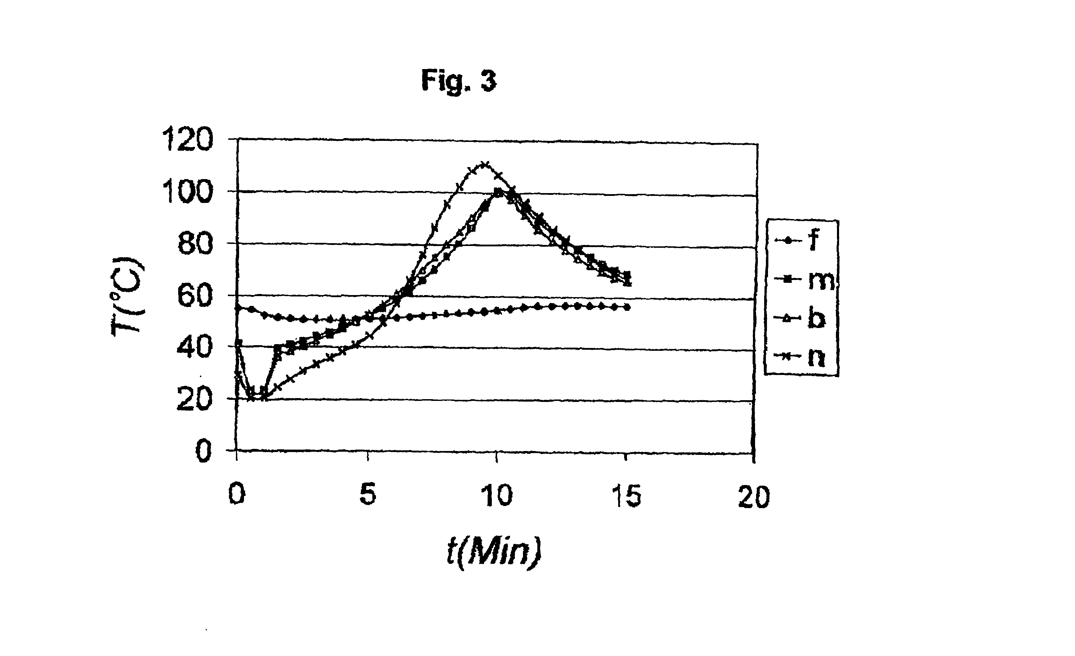

In Fig. 3 ist der Temperaturverlauf bei einer Formtemperatur von 55°C gezeigt. Es wurden 150 Teile Füllstoff auf 100 Teile Reinharz verwendet: 200 g Resapol A034, 300 g Füllstoff EXP DPR, 3 ml Katalysator, 0,6 Prom.D (Promotor D) und 3,2 ml Co (1%). Die Wanddicke der ausgehärteten Mischung war 10 mm. Die Temperaturmessungen wurden in unterschiedlichen Bereichen ausgeführt, wobei in der Legende dieser wie auch der folgenden Figuren f die Form, m die Mitte, b den Boden und ns einen Bereich nahe der Oberfläche bezeichnet.

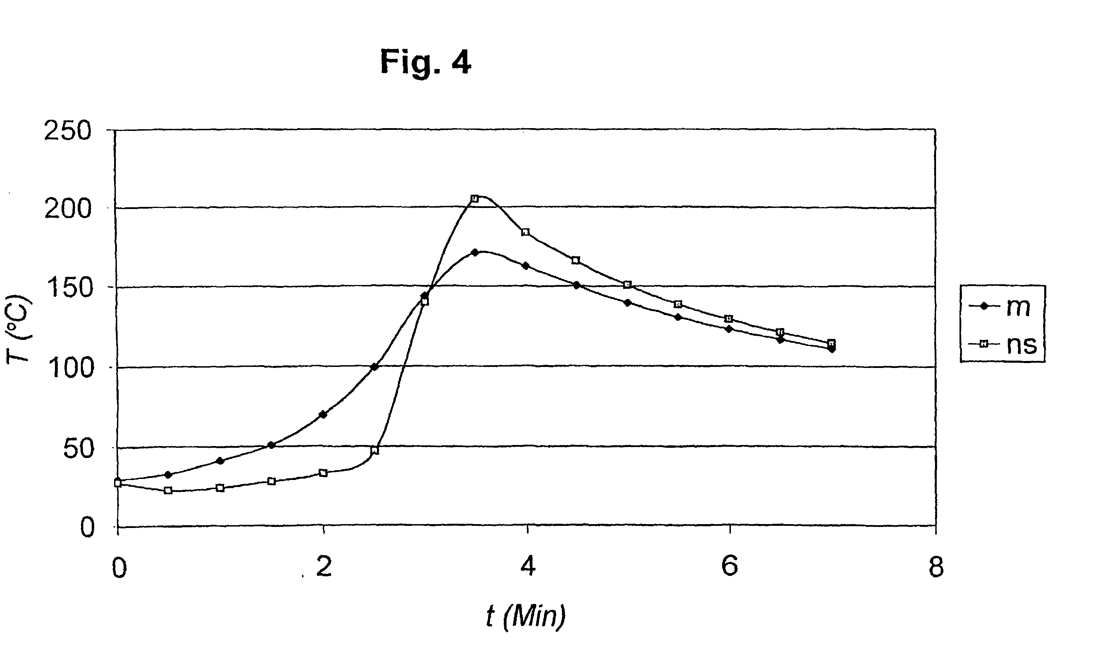

In Fig. 4 ist ein Vergleich gezeigt, um den Temperaturverlauf bei Abwesenheit von Füllstoff zu veranschaulichen. Es wurden verwendet: 220 g Resapol A034, 2 ml Katalysator, 0,6 ml Prom.D und 3,2% Co (1%). Die Temperatur steigt sehr schnell auf 200°C statt auf 110°C bei Vorhandensein von Füllstoff an.

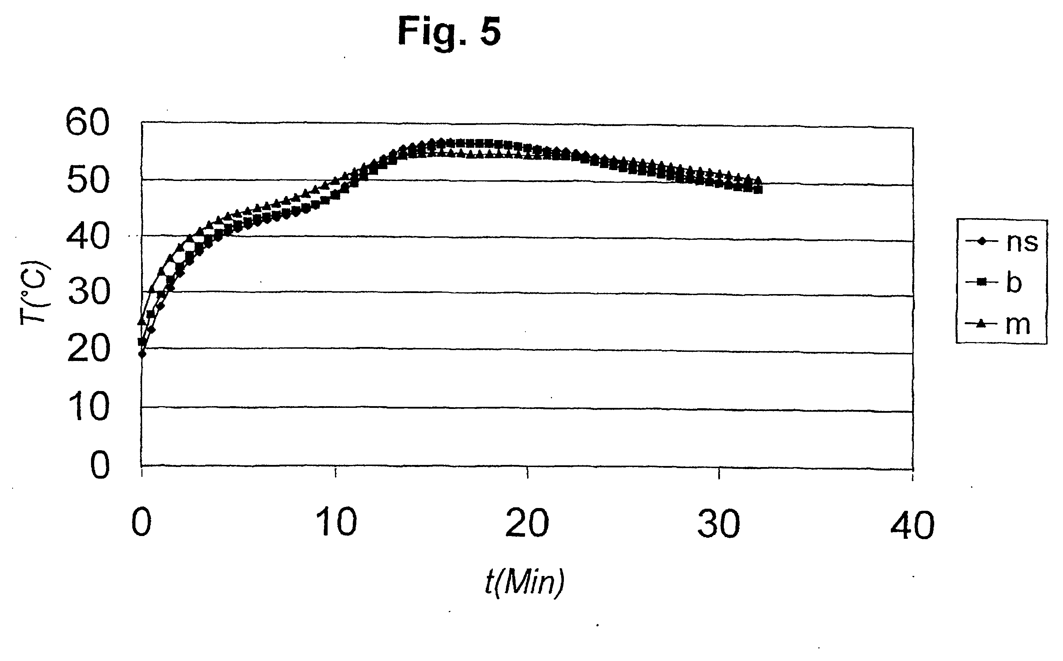

Weiter ist in Fig. 5 das Zeitverhalten der Reaktivität bei Reduktion von Beschleunigern veranschaulicht. Es wurden verwendet: 220 g Resapol A034, 300 g Füllstoff EXP DRP, 3 ml Katalysator, 0,6 ml Prom.D und 1,5 % Co (1%). Die Reaktivität der Füllstoffmischung kann durch Beschleunigerreduktion reduziert werden.

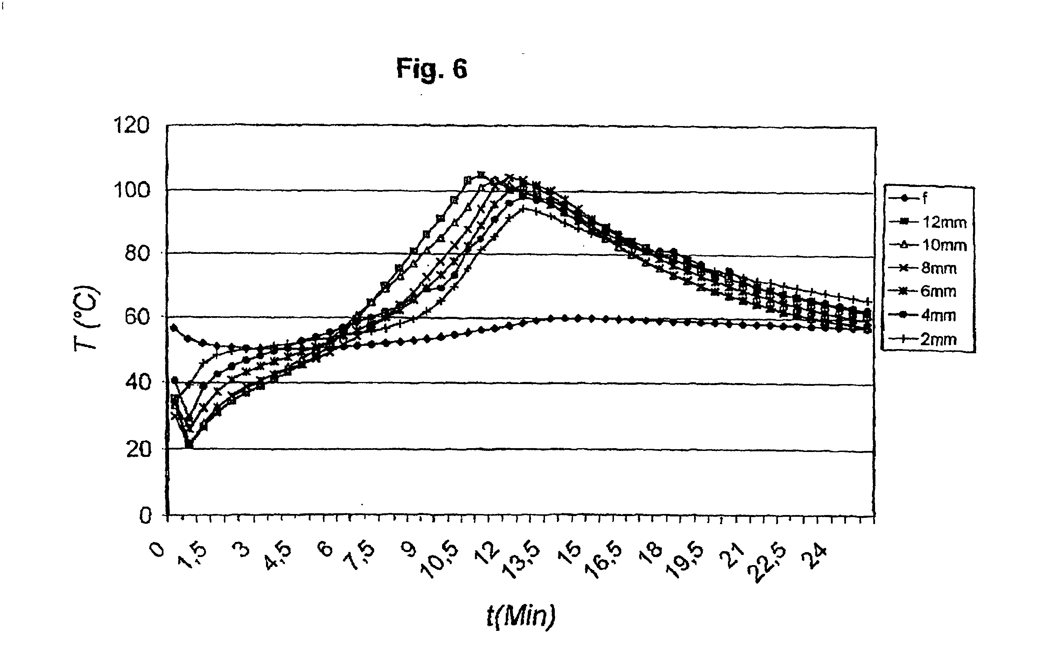

Fig. 6 zeigt Untersuchungen, die der Herstellung von Rohren DN 700 entsprechen. Es wurde eine mIschung von Harz, Füllstoff und Sand verwendet, wobei Glasfasern in einer der Wärmekapazität der Glasfasern entsprechenden Menge durch Sand ersetzt wurden: 220 g Resapol A034, 239 g Füllstoff Calcita Florada, 131 g Sand, 3 ml Katalysator, 0,6 ml Prom.D und 2,4 % Co (1%). Die Temperatur wurde in sieben unterschiedlichen Höhen gemessen, wobei sich die Höhenangaben auf den Boden beziehen, d.h. von dort aus gemessen wurden.

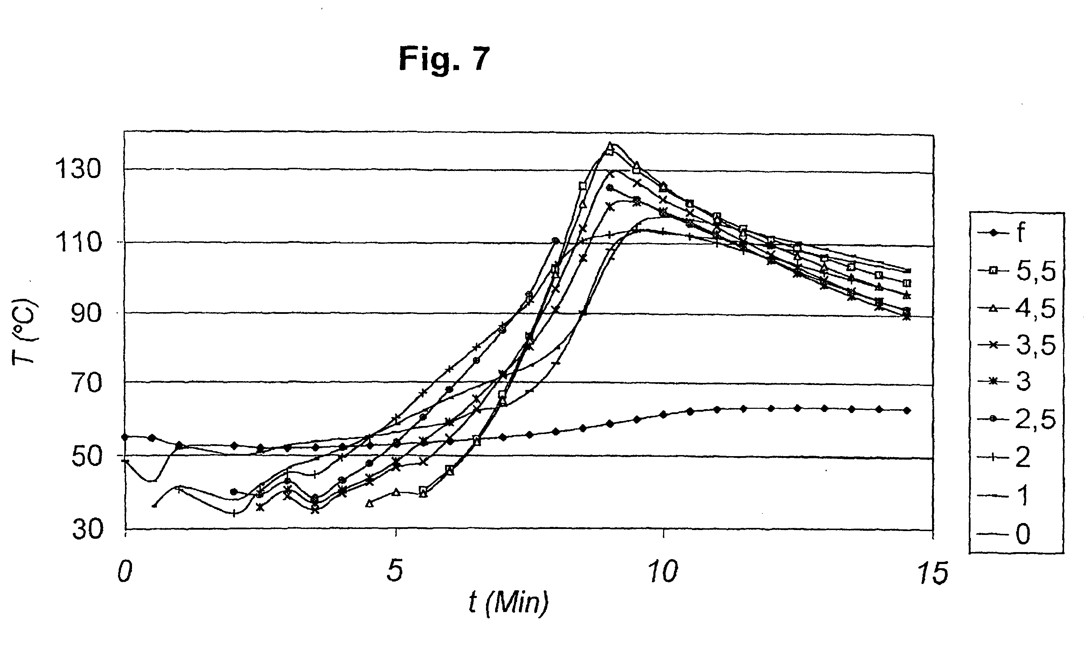

Fig. 7 zeigt Untersuchungen mit Harz, Füllstoff, Sand und Glasfasern in einer Zusammensetzung, die einem Rohr mit DN 700 PN, SN 4000, einschließlich Deckschicht entsprechen.

Es ergibt sich aus dem Obigen folgendes:

Bei höheren Matrizentemperaturen sollten Katalysatoren verwendet werden, die bei höheren Temperaturen reagieren. Bei Matrizentemperaturen über 60°C ist es zweckmäßig, nur t-Butyl-perbenzoat zu verwenden, und bei Temperaturen unter 55°C ist die Verwendung von Methylisobutylketonperoxid zweckmäßig. Die Verwendung von höheren Temperaturen gibt eine bessere Aushärtung an der Außenseite des Rohres. Die Verwendung einer Mischung von Katalysatoren, von den der eine bei niedriger Temperatur reagiert und der andere bei einer höheren Temperatur reagiert, verlängert die Härtungszeit. Die Exothermtemperatur ist jedoch niedriger und dadurch ist die Gefahr einer Rißbildungin der inneren Deckschicht verringert.

Durch Untersuchungen der oben erwähnten Art wurden Rezepturen für unterschiedliche Schichten in den Rohren festgelegt, so daß die Schichten auf der Innenseite des Rohres genauso schnell die die Schichten auf der Außenseite aushärten, obwohl sie später in die Matrize eingebracht worden sind. Im Beispiel 9 ist die Einspritzzeit 12 Minuten und die Zahl der Schichten 36. In vielen Schichten mußte die Reaktivität anders eingestellt werden, wobei die Gelzeit nicht geändert wurde. Um eine gewisse Gelzeit zu bekommen, muß eine Schicht mit Sand und viel Füllstoff reaktiver als eine Schicht ohne Sand und mit weniger Füllstoff sein.

Wenn die Einspritzzeit lang ist, etwa weil die Pumpenleistungen niedrig sind oder die Rohre dickwandig sind, kann es vorkommen, daß die Temperatur während des Eintrags von Rohstoffen steigt. In derartigen Fällen muß die Reaktivität der Mischungen herabgesetzt werden. Aufgrund der höheren Temperaturen wird dennoch eine kürzere Gelzeit und schnellere Reaktion erhalten.

Die Reaktivität der Mischung kann dadurch herabgesetzt werden, daß ein Inhibitor statt eines Akzelerators dem Polyesterharz vorne in der Lanze zugesetzt wird.

Fig. 7 zeigt Untersuchungen von Harz-Füllstoffmischungen für ein Rohr mit DN 700, PN 10, SN 10000, wobei die Temperaturen für die Mischungen bei unterschiedlichen Einspritzzeiten aufgezeichnet wurden. Gelbildung tritt bei einer Temperatur von 50°C ein. Die zwei ersten Schichten haben eine Gelzeit von 4 bis 5 Minuten. Diese Gelzeit verlängert sich noch, wenn Sand und Glasfasern gleichzeitig zugesetzt werden. Deswegen sollten diese Schichten noch reaktiver gemacht werden. Die Gelzeit der mittleren Schichten ist etwas zu kurz. Diese Schichten enthalten sehr viel Sand, wodurch sich die Gelzeit verlängert. Die letzten Schichten haben zu kurze Gelzeiten und hier muß die Reaktivität reduziert werden. Die Exothermtemperatur ist zu hoch. Sie wird aber wesentlich reduziert, wenn Sand und Glasfasern gleichzeitig zugesetzt werden.

Die Reaktivitäten der einzelnen Schichten werden teilweise dadurch eingestellt, daß unterschiedliche Katalysatoren in unterschiedlichen Mengen verwendet werden. Zweckmäßig ist die Verwendung einer Katalysatorenpumpe mit zwei unterschiedlichen Katalysatoren oder Katalysatormischungen. Der eine Katalysator reagiert bei niedriger Temperatur und der andere bei höherer Temperatur. Der Katalysator mit der höheren Anspringtemperatur wird dann im Endbereich der Einspritztemperatur verwendet, wenn bei längeren Einspritzzeiten die Temperatur so hoch wird, daß das Harz oder die Harz-Füllstoffmischung zu kurze Gelzeit bekommen würde und die Glasfasern zu schlecht imprägniert werden könnten.

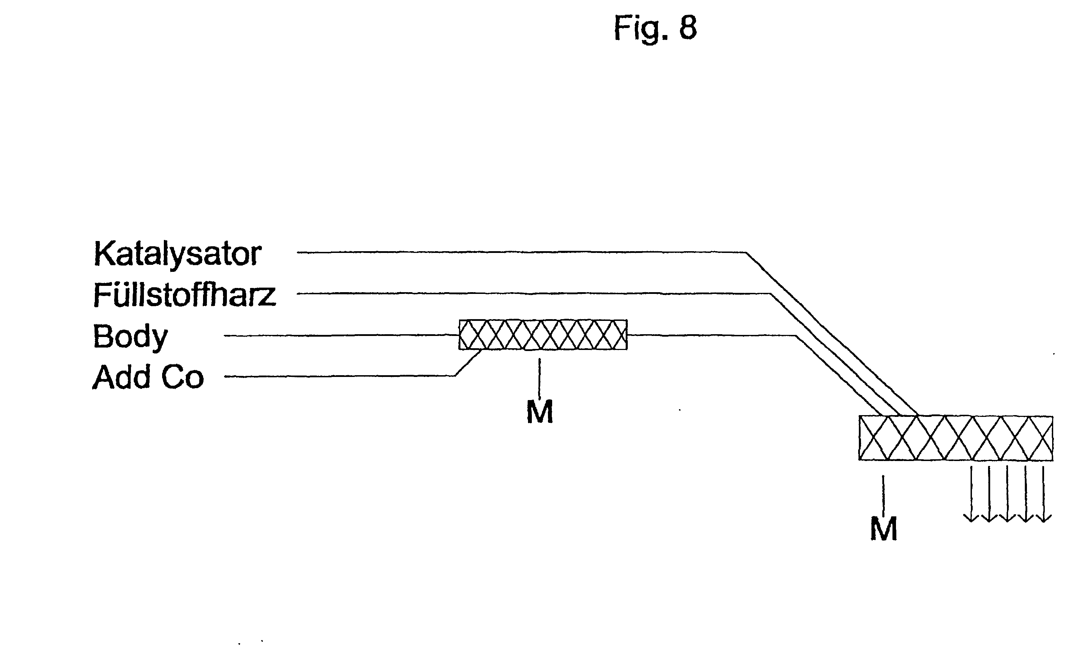

Die Reaktivität kann auch mit dem Verfahren wie unten beschrieben eingestellt werden: Es wird eine Mischung von Füllstoff und Harz mit hohem Füllstoffgehalt verwendet, z.B. 200 Teile Füllstoff auf 100 Teile Harz. In den unterschiedlichen Schichten wird Reinharz in dem Mischer vornein der Einspritzmaschine zugeführt. Die Menge an Reinharz ist in den ersten Schichten gering, aber sie erhöht sich in den Schichten auf der Innenseite, so daß der Gehalt an Glasfasern in diesen Schichten erhöht wird. Vor dieser Zuführung von Reinharz wird Akzelerator (Add Co) zu dem Reinharz (Body) durch die Verwendung eines separaten Mischers (M) zugeführt, wie in Fig. 8 veranschaulicht ist.

## Patentansprüche

1. Verfahren zur Herstellung von geschleuderten glasfaserverstärkten Kunststoffrohren, wobei flüssiges aushärtbares Harz, welches einen Füllstoff enthalten kann, zusammen mit Glasfasern und Additiven für die Aushärtung, möglicherweise auch mit Sand, in eine rotierende Matrize eingebracht wird und die Matrize beim Einbringen der Rohstoffe eine Temperatur zwischen 40°C und 75°C hat,
**dadurch gekennzeichnet, daß**
die Wärmekapazität der Matrize so hoch ist, daß die Temperatur der Matrize mit Einbringen der Rohstoffe nicht mehr als 10°C gesenkt wird,
zum Aufwärmen der Matrize Warmwasser verwendet wird und
nach dem Starten der exothermen Reaktion des Harzes Warmwasser auf die Matrize gespritzt wird, um die Temperatur der Matrize mindestens bei 60°C zu halten, bis das Rohr ausgezogen wird.

2. Verfahren nach Anspruch 1, wobei das Rohr mehrere Schichten hat, **dadurch gekennzeichnet, daß** mit Ausnahme der Deckschichten außen und innen die Reaktivität des Harzes in den anderen Schichten so eingestellt wird, daß sie höher in den Schichten vor der inneren Deckschicht als in der Schicht nach der äußeren Deckschicht liegt.

3. Verfahren nach Anspruch 1 oder 2, wobei die Rohre kontinuierlich hergestellt werden, das neue sofort nach dem alten,
**dadurch gekennzeichnet, daß** kurz vor dem Entformen der Rohre Warmwasser auf die Matrize gespritzt wird, so daß die Matrize dieselbe Temperatur bekommt, die bei der Herstellung des neuen Rohres erforderlich ist.

4. Verfahren nach einem der Ansprüche 1 bis 3, **dadurch gekennzeichnet, daß** die Temperatur des Warmwassers und die Spritzdauer so gewählt werden, daß die Temperatur der Matrize mindestens bei 70°C bleibt, bis das Rohr ausgezogen wird.

5. Verfahren nach einem der Ansprüche 1 bis 4, **dadurch gekennzeichnet, daß** Polyesterharz und/oder Styrol in einen Mischer vorne in der Lanze der Einspritzmaschine zu der Füllstoff-Polyesterharz-Mischung eingemischt wird.

6. Verfahren nach Anspruch 5, **dadurch gekennzeichnet, daß** mehr Polyesterharz zu den Schichten auf der Innenseite des Rohres als auf der Außenseite zugesetzt wird.

7. Verfahren nach Anspruch 5 oder 6, **dadurch gekennzeichnet, daß** Akzelerator zu dem Polyesterharz vorne in der Lanze der Einspritzmaschine zu unterschiedlichen Schichten zugesetzt wird, um die Reaktivität in diesen Schichten zu erhöhen, oder Inhibitor verwendet wird, um die Reaktivität zu reduzieren.

8. Verfahren nach einem der Ansprüche 5 bis 7, **dadurch gekennzeichnet, daß** eine Mischung Akzelerator/Polyesterharz in den Sandschichten in der Mitte des Rohres zugesetzt wird, um die Reaktivität der Füllstoffmischung dort zu erhöhen.

9. Verfahren nach einem der Ansprüche 1 bis 8, wobei mindestens zwei Katalysatorpumpen mit unterschiedlichen Katalysatoren verwendet werden, **dadurch gekennzeichnet, daß** in der einen Pumpe ein Katalysator oder eine Katalysatormischung mit niedriger Anspringtemperatur verwendet wird und in der anderen ein Katalysator oder eine Katalysatormischung mit einer höheren Anspringtemperatur verwendet wird und daß der Katalysator oder die Katalysatormischung mit der höheren Anspringtemperatur verwendet wird, um eine längere Gelzeit zu bekommen.

10. Verfahren nach einem der Ansprüche 1 bis 9, **dadurch gekennzeichnet, daß** der Glasfasergehalt im Innenbereich des Rohres höher als im Außenbereich gewählt wird und mit Ausnahme der inneren Deckschicht alle Schichten im Innenbereich des Rohres Füllstoff enthalten.

11. Verfahren nach Anspruch 10, **dadurch gekennzeichnet, daß**, wo Glasfasern mit Orientierung in Umfangsrichtung verwendet werden, ein Füllstoffgehalt in dem Polyesterharz von mindestens 40% gewählt wird.

12. Verfahren nach einem der Ansprüche 1 bis 11, **dadurch gekennzeichnet, daß** im Innenbereich des Rohres Glasfasern verwendet werden, deren Länge größer als die der im Außenbereich des Rohres verwendeten Glasfasern ist.

13. Verfahren nach einem der Ansprüche 1 bis 12, **dadurch gekennzeichnet, daß** im Außenbereich des Rohres in den Schichten, in denen kein Sand vorhanden ist, teils kurze Glasfasern und teils lange Glasfasern verwendet werden.

14. Verfahren nach einem der Ansprüche 1 bis 13, bei dem Isocyanat in das Harz für die innere Deckschicht eingemischt wird, **dadurch gekennzeichnet, daß** erst ein größerer Teil der Deckschicht ohne Isocyanat eingebracht wird, dann der Rest der Deckschicht mit Isocyanat in einer Menge von 4 bis 6 Gew.% zugeführt wird und anschließend das fertige Rohr auf der Innenseite mit Isocyanat behandelt wird.

15. Verfahren nach einem der Ansprüche 1 bis 14, für die Herstellung von geschleuderten Kunststoffrohren, wobei die Rohstoffe von einer Einspritzmaschine in eine rotierende Matrize eingebracht werden, **dadurch gekennzeichnet, daß** Matrize und Einspritzmaschine in derselben Ebene bewegbar sind, daß die Einspritzmaschine aus einer festen Position arbeitet und daß die Einspritzmaschine auf einem Wagen montiert ist, welcher waagerecht zu der Bewegung der Schleudermaschine versetzt wird.

16. Anlage zur Herstellung von geschleuderten glasfaserverstärkten Kunststoffrohren, wobei die Rohstoffe aus einer Einspritzmaschine in eine rotierende Matrize eingebracht werden,
**dadurch gekennzeichnet, daß**
die Einspritzmaschine (L) in einer festen Position bewegbar ist, aber daß die Schleudermaschine (M-1, M-2) auf einem Wagen (W) montiert ist, welcher quer zu der Einspritzmaschine in derselben Ebene bewegbar ist,
die Wärmekapazität der Matrize so hoch ist, daß die Temperatur der Matrize unter Einfluß der Rohstoffe nicht mehr als 10°C gesenkt wird und
zum Aufwärmen der Matrize Warmwasser verwendet wird.

17. Anlage nach Anspruch 16, **dadurch gekennzeichnet, daß** Spritzvorrichtungen vorgesehen sind, mittels deren die Matrizen mit Warmwasser gespritzt werden, wobei die Spritzvorrichtungen in festen Positionen sind und nicht mit den Matrizen bewegbar sind, und daß eine Einrichtung vorgesehen ist, mittels der das Wasser unter dem Wagen in einem festen Behälter aufgefangen wird.

18. Anlage nach Anspruch 16 oder 17, **dadurch gekennzeichnet, daß** sich der Wagen in einem geschlossenen Raum bewegt, wobei es nur Öffnungen für das Einführen der Rohstoffe und Ausziehen der Rohre sowie für Türen, Rohr- und Ventilationsanschlüsse gibt.

## Claims

1. Method of producing centrifugally cast, glass fibre reinforced, synthetic material tubes, wherein liquid resin, which can be cured and can contain a filling material, is inserted into a rotating mould with glass fibres and additives for the curing process and possibly also with sand and when the raw materials are inserted the mould has a temperature between 40°C and 75°C,
**characterised in that**
the heat capacity of the mould is so high that the temperature of the mould is lowered by no more than 10°C when the raw materials are inserted,
hot water is used to heat up the mould and
hot water is sprayed onto the mould after the exothermic reaction of the resin has begun in order to keep the temperature of the mould at least at 60°C until the tube is extracted.

2. Method as claimed in Claim 1, wherein the tube has several layers, **characterised in that** with the exception of the outer and inner cover layers the reactivity of the resin in the other layers is adjusted in such a manner that it is higher in the layers before the inner cover layer than in the layer after the outer cover layer.

3. Method as claimed in Claim 1 or 2, wherein the tubes are produced in a continuous manner, one immediately after the other, **characterised in that** hot water is sprayed onto the mould shortly before the tube is removed in order to keep the mould at the necessary temperature for producing the new tube.

4. Method as claimed in any one of Claims 1 to 3, **characterised in that** the temperature of the hot water and the duration of the spraying process are chosen in such a manner that the temperature of the mould remains at least at 70°C until the tube is extracted.

5. Method as claimed in any one of Claims 1 to 4, **characterised in that** polyester resin and/or styrene is mixed into the filling material-polyester resin-mixture in a mixer at the front in the lance of the injection machine.

6. Method as claimed in Claim 5, **characterised in that** more polyester resin is added to the layers on the inner side of the tube than the outer side.

7. Method as claimed in Claim 5 or 6, **characterised in that** an accelerator is added to the polyester resin at the front in the lance of the injection machine to various layers in order to increase the reactivity in these layers, or an inhibitor is used to reduce the reactivity.

8. Method as claimed in any one of Claims 5 to 7, **characterised in that** a mixture of accelerator/polyester resin is added in the sand layers in the middle of the tube in order to increase the reactivity of the filling material mixture at that location.

9. Method as claimed in any one of Claims 1 to 8, wherein at least two catalyst pumps having different catalysts are used, **characterised in that** in the one pump a catalyst or catalyst mixture having a low light-off temperature is used and in the other pump a catalyst or catalyst mixture having a higher light-off temperature is used, and **in that** the catalyst or catalyst mixture having the higher light-off temperature is used in order to provide a longer gelling time.

10. Method as claimed in any one of Claims 1 to 9, **characterised in that** the glass fibre content is chosen so as to be higher in the inner region of the tube than in the outer region and all the layers in the inner region of the tube, with the exception of the inner cover layer, contain filling material.

11. Method as claimed in Claim 10, **characterised in that** when glass fibres are used having their orientation in the peripheral direction, a filling material content in the polyester resin of at least 40% is chosen.

12. Method as claimed in any one of Claims 1 to 11, **characterised in that** in the inner region of the tube glass fibres are used whose length is longer than the length of the glass fibres used in the outer region of the tube.

13. Method as claimed in any one of Claims 1 to 12, **characterised in that** in the outer region of the tube, short glass fibres and long glass fibres are used in the layers in which no sand is provided.

14. Method as claimed in any one of Claims 1 to 13, wherein isocyanate is mixed into the resin for the inner cover layer, **characterised in that** firstly a larger portion of the cover layer is inserted without isocyanate, then the rest of the cover layer is supplied with isocyanate in an amount of 4 to 6 wt.% and subsequently the finished tube is treated with isocyanate on the inner side.

15. Method as claimed in any one of Claims 1 to 14 for the production of centrifugally cast synthetic material tubes, wherein the raw materials are inserted into a rotating mould from an injection machine, **characterised in that** the mould and injection machine are movable in the same plane, **in that** the injection machine operates from a fixed position and **in that** the injection machine is fixed on a carriage which is displaced horizontally with respect to the movement of the centrifugal casting machine.

16. System for producing centrifugally cast, glass fibre reinforced, synthetic material tubes, wherein the raw materials are inserted into a rotating mould from an injection machine,
**characterised in that**
the injection machine (L) is movable in a fixed position, but the centrifugal casting machine (M-1, M-2) is mounted on a carriage (W) which is movable in a transverse manner with respect to the injection machine in the same plane,
the heat capacity of the mould is so high that the temperature of the mould is lowered by no more than 10°C under the influence of the raw materials and
hot water is used to heat up the mould.

17. System as claimed in Claim 16, **characterised in that** spraying devices are provided, by means of which hot water is sprayed onto the moulds, wherein the spraying devices are in fixed positions and are not movable with the moulds and **in that** a device is provided, by means of which the water is captured in a fixed container beneath the carriage.

18. System as claimed in Claim 16 or 17, **characterised in that** the carriage moves in an enclosed space, wherein there are only apertures for the insertion of the raw materials and the extraction of the tubes as well as for door, tube and ventilation connections.

## Revendications

1. Procédé de fabrication par centrifugation de tubes en matière plastique renforcée par fibres de verre, selon lequel une résine réticulable liquide, pouvant contenir une charge, est introduite avec des fibres de verre et des additifs pour la réticulation, éventuellement également avec du sable, dans une matrice rotative et ladite matrice, lors de l'introduction des matières premières, présente une température comprise dans une plage allant de 40°C à 75°C,
**caractérisé en ce**
**que** la capacité thermique de la matrice est telle, que la température de ladite matrice ne diminue pas de plus de 10°C lors de l'introduction des matières premières,
**qu'**on utilise de l'eau chaude pour réchauffer la matrice et
**qu'**après démarrage de la réaction exothermique de la résine, on pulvérise de l'eau chaude sur la matrice aux fins de maintenir la température de la matrice au moins à 60°C, jusqu'à ce que le tube soit extrait.

2. Procédé selon la revendication 1, le tube présentant plusieurs couches, **caractérisé en ce qu'**à l'exception des couches de surface intérieure et extérieure, la réactivité de la résine dans les autres couches est choisie de telle sorte qu'elle soit plus élevée dans les couches avant la couche de surface intérieure que dans la couche après la couche de surface extérieure.

3. Procédé selon la revendication 1 ou 2, selon lequel les tubes sont fabriqués en continu, le nouveau tube immédiatement à la suite du tube précédent, **caractérisé en ce que** juste avant le démoulage des tubes on pulvérise de l'eau chaude sur la matrice, de telle sorte que la matrice se trouve à la même température que celle nécessaire pour la fabrication du nouveau tube.

4. Procédé selon une des revendications 1 à 3, **caractérisé en ce que** la température de l'eau chaude et la durée de pulvérisation sont choisies telles que la température de la matrice reste au moins à 70°C jusqu'à ce que le tube soit extrait.

5. Procédé selon une des revendications 1 à 4, **caractérisé en ce qu'**on incorpore de la résine polyester et/ou du styrène dans le mélange résine polyester-charge, dans un mélangeur, en tête dans la lance de la machine d'injection.

6. Procédé selon la revendication 5, **caractérisé en ce que** l'on ajoute plus de résine polyester aux couches côté face intérieure du tube que côté face extérieure.

7. Procédé selon la revendication 5 ou 6, **caractérisé en ce qu'**on ajoute un accélérateur à la résine polyester en tête dans la lance de la machine d'injection aux fins d'augmenter la réactivité dans ces couches, ou bien on utilise un inhibiteur pour réduire la réactivité.

8. Procédé selon une des revendications 5 à 7, **caractérisé en ce qu'**on ajoute un mélange accélérateur/résine polyester dans les couches de sable, au milieu du tube, aux fins d'augmenter la réactivité du mélange de charge à ce niveau.

9. Procédé selon une des revendications 1 à 8, dans lequel on utilise au moins deux pompes à catalyseur avec des catalyseurs différents, **caractérisé en ce que**, dans l'une des pompes, on utilise un catalyseur ou un mélange de catalyseur à température de démarrage basse et dans l'autre un catalyseur ou un mélange de catalyseur à température de démarrage plus élevée et **en ce que** le catalyseur ou le mélange de catalyseur à température de démarrage plus élevée est utilisé pour obtenir une durée de gel plus longue.

10. Procédé selon une des revendications 1 à 9, **caractérisé en ce que** dans la teneur en fibres de verre dans la zone intérieure du tube est plus élevée que dans la zone extérieure et **en ce que**, à l'exception de la couche de surface intérieure, toutes les couches dans la zone intérieure du tube contiennent une charge.

11. Procédé selon la revendication 10, **caractérisé en ce qu'**aux endroits où les fibres de verre sont orientées dans la direction périphérique, on utilise une proportion de charge dans la résine polyester d'au moins 40%.

12. Procédé selon une des revendications 1 à 11, **caractérisé en ce que** dans la zone intérieure du tube, on utilise des fibres de verre, dont la longueur est supérieure à celle des fibres de verre utilisées dans la zone extérieure du tube.

13. Procédé selon une des revendications 1 à 12, **caractérisé en ce que** dans la zone extérieure du tube, dans les couches ne comportant pas de sable, on utilise pour partie des fibres de verre courtes et pour partie des fibres de verre longues.

14. Procédé selon une des revendications 1 à 13, dans lequel de l'isocyanate est incorporé à la résine pour la couche de couverture intérieure, **caractérisé en ce qu'**on introduit d'abord une grande part de la couche de couverture sans isocyanate, puis on introduit le reste de la couche de couverture avec de l'isocyanate en une quantité de 4 à 6% en poids et enfin on traite le tube fini, côté face intérieure, avec de l'isocyanate.

15. Procédé selon une des revendications 1 à 14 pour la fabrication par centrifugation de tubes en matière plastique, les matières premières étant introduites dans une matrice rotative au moyen d'une machine d'injection, **caractérisé en ce que** la matrice et la machine d'injection sont mobiles dans le même plan, **en ce que** la machine d'injection travaille à partir d'une position fixe, et **en ce que** la machine d'injection est montée sur un chariot qui est décalé horizontalement par rapport au déplacement de la machine d'injection.

16. Installation pour la production par centrifugation de tubes en matière plastique renforcée de fibres de verre, les matières premières étant introduites par une machine d'injection dans une matrice rotative,
**caractérisée en ce**
**que** la machine d'injection (L) est mobile dans une position fixe, tandis que la machine de centrifugation (M-1, M-2) est montée sur un chariot (W) qui peut être déplacé transversalement à la machine d'injection, dans le même plan que celle-ci,
**que** la capacité thermique de la matrice est telle que la température de la matrice ne diminue pas de plus de 10°C sous l'influence des matières premières et
**qu'**on utilise de l'eau chaude pour réchauffer la matrice.

17. Installation selon la revendication 16, **caractérisée en ce qu'**il est prévu des dispositifs de pulvérisation à l'aide desquels on pulvérise de l'eau chaude sur les matrices, les dispositifs de pulvérisation occupant des positions fixes et ne pouvant être déplacés avec les matrices et **en ce qu'**il est prévu un dispositif à l'aide duquel l'eau est recueillie sous le chariot dans un récipient fixe.

18. Installation selon la revendication 16 ou 17, **caractérisée en ce que** le chariot se déplace dans un espace fermé, seules des ouvertures étant prévues pour l'introduction des matières premières et l'extraction des tubes, ainsi que pour des portes, des raccords de tuyauteries et de ventilation.
